# EUROPEAN PATENT SPECIFICATION

(11) **EP 2 740 005 B1**
(45) Date of publication and mention of the grant of the patent: **02.09.2020**
(21) Application number: 12740670.0
(22) Date of filing: 11.07.2012
(51) Int. Cl.: G02C 5/22, G02C 5/10, B23K 11/14

(54) **STRUCTURAL ELEMENT FOR EYEGLASSES, SYSTEM AND PROCEDURE FOR ASSEMBLING EYEGLASSES FRAMES AND EYEGLASSES FRAME**
STRUKTURELEMENT FÜR BRILLEN, SYSTEM UND VERFAHREN ZUM ZUSAMMENBAUEN EINES BRILLENGESTELLS, UND BRILLENGESTELL
ELÉMENT DE STRUCTURE POUR LUNETTES, SYSTEME ET METHODE D'ASSEMBLAGE D'UNE MONTURE DE LUNETTES, ET MONTURE DE LUNETTES

(30) Priority: 01.08.2011 IT VI20110215
(43) Date of publication of application: 11.06.2014
(73) Proprietor: Ideal S.R.L., 32030 Quero (BL) (IT)
(72) Inventor: SANTINI, Stefano, I-32030 Quero (BL) (IT)
(74) Representative: Dragotti, Gianfranco
(86) International application number: PCT/IB2012/001380
(87) International publication number: WO 2013/017923

(56) References cited:
- EP-A1- 1 607 787
- WO-A2-2008/087050
- US-A- 5 791 015

## Description

### TECHNICAL FIELD OF THE INVENTION

The present invention relates to the technical field of components for glasses. In particular, the present invention relates to the technical field of the production of structural elements suitable to be used for assembling frames for glasses. In further detail, the present invention relates to an innovative idea for the production of at least one structural element of the type just described, in addition to an innovative idea for fixing said structural element to a further component of the frame for glasses, for example to a connection element or joint or hinge of said frame.

### DESCRIPTION OF THE STATE OF THE ART

It is known in the state of the art that frames for glasses comprise fixed structural elements (or elements suitable for being kept in a substantially fixed position during use of the glasses) such as, for example, the bridge of the glasses, and movable structural elements (such as, for example, the side pieces), said "fixed" and "movable" structural elements being reciprocally connected in a rotating manner by connection means or elements such as hinges, joints or similar means. Methods, processes or in general solutions for fixing reciprocally and in a rigid manner at least one structural element and at least one connection element or hinge are likewise known in the state of the art.

For example, one of the most widely used methods or processes in the state of the art for fixing a hinge element for example to the side piece or to the lateral element of a pair of glasses (of a frame) is electrowelding. According to this process, protruding and substantially point-like portions (also defined as electrowelding points) are formed on the hinge element (usually metal), suitable to be fused following the passage of electrical current through them. The electrowelding points can be provided on the hinge element according to various methods, but they are usually obtained preferably by milling the hinge element, and hence by removing part of the material of which the hinge element is made. Once the electrowelding points have been formed, the structural element of the glasses and the hinge element are brought into reciprocal contact, so that the protruding electrowelding points come into contact with the structural element. At this point, via the passage of electric current through the structural element (for example the side piece) and the connection element or hinge, fusion of the electrowelding points is obtained and therefore rigid fixing of the hinge to the side piece (once the previously fused electrowelding points have cooled).

The method described above has various drawbacks and/or problems, however, which in particular can be summarised as follows.

Firstly, production of the electrowelding points (also called fusion points) on the hinge element is often a difficult and lengthy (and therefore costly) operation due to the very small dimensions of said hinge element. Furthermore, the electrowelding or fusion points are often unsightly (especially when they are formed on different portions of the hinge or joint element to allow fixing of the joint to two structural elements of the frame, for example a side piece and the "lateral element" or bridge) since the joint is often visible in the completely assembled frame. Furthermore, according to the commonest methods of assembly of frames of glasses, the joints or hinges are "preassembled" before being fixed by electrowelding to the other component parts of the frame. In fact, the latest generation joints (for example miniaturised or extraflex elastic joints) often comprise a plurality of miniaturised components (springs, screws etc.) which must be assembled in advance. The term hinges or extraflex joints indicates in particular hinges or joints in which the rotation of a hinge element with respect to the other hinge element is regulated by elastic means, for example springs or similar means. The electrowelding process, which involves the passage of electrical current through the joint and therefore increase in temperature of the joint until fusion of the electrowelding points is obtained, could damage the components of the joint or hinge and therefore compromise at least partly the functionality thereof. A further problem deriving from formation of the fusion or electrowelding points on the joint or hinge (for example by milling or removal of material as previously described) relates to the fact that the dimensions of the hinge or joint (often very small) allow only a fairly low number of fusion elements to be produced, and also the dimension of the fusion points must be as small as possible. However, the limited number and reduced dimensions of the fusion points do not allow completely reliable fixing of the hinge to other structural elements of the frame. Lastly, production of the fusion or electrowelding points on the joint or hinge poses serious logistical problems, in particular as regards warehouse storage of the hinge elements and the other structural elements of the frames. In fact, once the fusion or electrowelding points have been obtained on a hinge element, the same hinge element may be fixed to one or more of said structural elements practically by electrowelding only, otherwise the visible fusion points would compromise the appearance of the frames. It would be more desirable to have hinge elements that could be fixed to other structural elements both by electrowelding and by means of other procedures, deciding what procedure to adopt at the time of final assembly of the frames, according to the type of frames and other operational criteria.

The object of the present invention is therefore to remedy the drawbacks summarised previously, typical of the joints or hinges known in the state of the art and of the procedures known in the state of the art for fixing the known joints or hinges to other structural elements of glasses and/or of frames for glasses. A further object and aim of the present invention is in particular to propose an alternative solution to formation of the fusion points on the joint or hinge, and in particular a solution that always allows fixing of the joints or hinges both by electrowelding and according to other solutions, but which avoids the unsightliness of the fusion points on the joints or hinges, and overheating of and/or damage to the component parts of the joints or hinges during electrowelding.

The predetermined objects described previously will be achieved by producing a structural element for frames of glasses as claimed in the main claim 1. Particular forms of production of the structural element according to the present invention are specified in the dependent claims and guarantee the further advantages which will be clarified below. The protective scope of the present invention also comprises a method for the production of a structural element for frames of glasses, a set or system for the assembly of frames for glasses which comprises at least one structural element and a connection or joint element, in addition to a frame for glasses.

### DESCRIPTION OF THE PRESENT INVENTION

The present invention can be advantageously applied in particular when used for assembling glasses or similar accessories, in particular when used for rigidly coupling or fixing to each other a joint or hinge of glasses and a second structural element of said glasses, for example a side piece or the lateral element or bridge of the same or front part of said glasses. This is why a detailed description of the structural element according to the present invention will be given below, in addition to the method proposed according to the present invention for the formation and/or production of said structural element. It should be noted, however, that the possible applications of the present invention are not limited to the case of glasses and/or frames for glasses and/or structural elements for glasses.

On the contrary, the present invention can be and is advantageously applied also in other fields, and in particular in all those cases requiring a structural element and a joint or hinge with reduced dimensions or also miniaturised for reciprocal fixing, preferably by electrowelding.

The present invention is based on the general consideration that the objects summarised previously can be achieved and the problems typical of the solutions known in the art can be solved and overcome by providing the fusion or electrowelding points on the structural element itself instead of on the joint or hinge. In particular, the present invention is based on the general consideration that the predetermined objects can be achieved and the problems of the solutions known in the state of the art can be solved by producing a structural element which comprises protruding fusion or electrowelding points made of a material suitable for fusing by electrowelding, so as to permit fixing by electrowelding of said structural element to the joint or hinge of a frame for glasses. In this way, given the usual dimensions of the structural elements for glasses such as side pieces, front parts etc. (dimensions considerably larger than those of the joints or hinges), the fusion points can be produced in a number and with dimensions as required and in any case not limited or conditioned by the dimensions of the joint or hinge. Furthermore, the fusion points can be produced by means of different methods and not only by milling and/or removal of material, but alternatively for example by deposition of material fused by electrowelding or also by processes such as coining and/or truncation.

Lastly, formation of the fusion points on the structural element instead of on the hinge will avoid or at least limit the unsightliness produced by the fusion points on the joint or hinge, will allow reciprocal fixing of the structural element or hinge also by means of methods alternative to electrowelding (always maintaining a good appearance), will avoid overheating and possible total or partial damage of the component parts of the joint in the case of reciprocal fixing of the joint or hinge and a structural element by electrowelding, in addition to improved logistical management of the component parts of the frames for glasses, in particular of the joints which, since they are free of points fused by electrowelding, can be applied or fixed to the other structural elements also by methods or procedures alternative to electrowelding.

### BRIEF DESCRIPTION OF THE FIGURES

Below, the present invention will be further explained and clarified with particular reference to the accompanying drawings. It should be noted, however, that the present invention is not limited to the embodiments shown in the accompanying drawings; the scope of the present invention comprises all those modifications made to the embodiments described and represented which are clear, evident and obvious to a person skilled in the art.

In particular, in the accompanying drawings:
- figure 1 shows a partial view of a frame for glasses assembled using a structural element according to the present invention;
- figures 2a and 2b each show a structural element according to an embodiment of the present invention;
- figures 3a and 3b each show a procedure for the production of a structural element according to the present invention;
- figures 4a and 4b each show the fixing of a structural element according to the present invention to a joint or hinge of glasses;
- figures 5a and 5b each show an example of use of a structural element according to the present invention;
- figures 6a to 6c each show an example of use of the fusion points (in electrowelding material) of the structural element according to the present invention.

### DETAILED DESCRIPTION OF SOME EMBODIMENTS OF THE PRESENT INVENTION

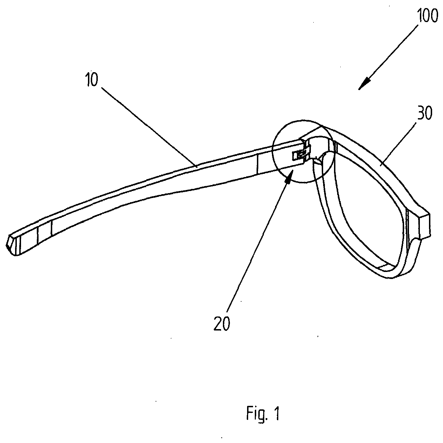

In figure 1, the reference number 100 identifies a frame for glasses (shown only partially), which comprises a movable structural element 10 (a side piece) rotatably connected to a fixed structural element 30 by means of a joint or hinge 20. The term movable structural element therefore indicates an element or component of the frame 100 suitable for being moved, in particular rotated during use of the glasses (when they are worn), while the term fixed structural element indicates an element or component of the frame 100 suitable for maintaining a substantially fixed position during use of the glasses. The side piece 10 is moved or rotated when the glasses are worn and can therefore be defined as a movable structural element, while the lateral element or bridge 30 of the glasses remains in a substantially fixed position (resting on the user's nose) and can therefore be defined as a fixed structural element.

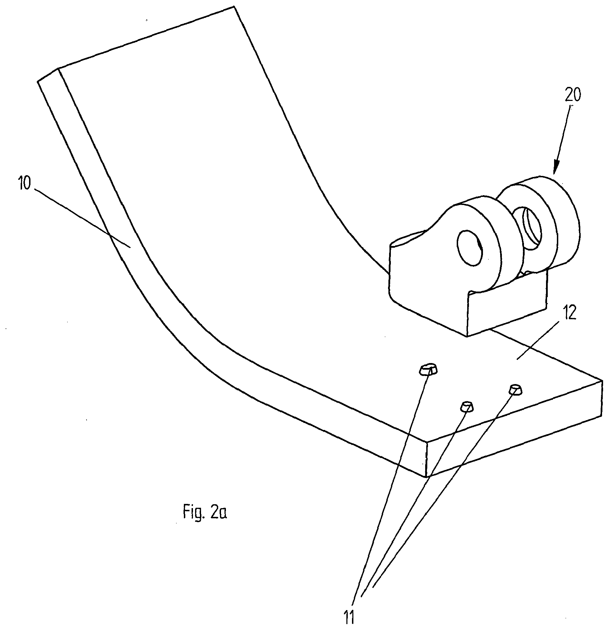

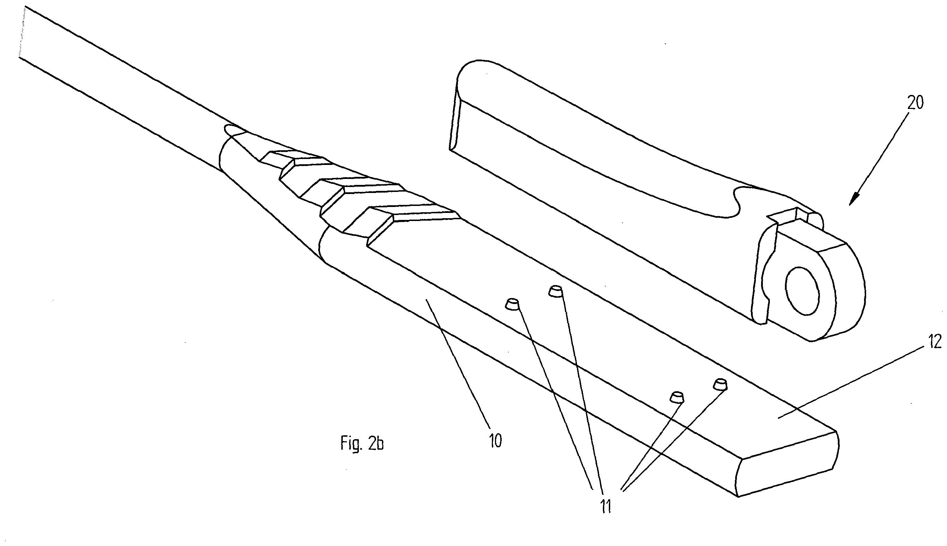

The particular features or characteristics of the structural element 10 according to the present invention will be described below with reference to figures 2a and 2b, in which component parts and/or characteristics of the present invention already described previously with reference to figure 1 are identified by the same reference numbers. According to the embodiments shown in figures 2a and 2b, the structural element 10 comprises a substantially flat main surface 12 from which a plurality (with number varying according to requirements and/or circumstances) of fusion points 11 extend, made of a material suitable to be fused by electrowelding. Also the shape of the fusion points (defined below also as fusion portions, or protruding or jutting fusion elements) can vary according to requirements and/or circumstances, the possible shapes not being limited to the frustoconical shape shown in figures 2a and 2b, but comprising shapes such as pyramids, cubes, parallelepipeds or similar.

According to the present invention, the fusion portions 11 are used for fixing by electrowelding of the joint or hinge element or also connection 20 to the structural element 10, so as to reciprocally fix the structural element 10 to a second structural element, for example to the structural element 30 as previously described with reference to figure 1. Further details of the electrowelding process are given further on in the present description, but it is evident that the main idea underlying the present invention is to produce the fusion elements 11 not on the joint 20 according to the techniques known in the art (for example by milling or removal of material) but directly on the structural element 10. The reciprocal fixing of the joint 20 and the structural element 10 will therefore be obtained by moving the joint 20 until it stops against the fusion elements or points 11 causing the passage of electrical current through the structural element 10 and the joint 20. The passage of electrical current, in particular the concentration of electrical current in the fusion points 11, will cause fusion of the fusion elements 11 resulting in the joint 20 being fixed to the element 10 after cooling of the component fusion material of the protruding elements 11.

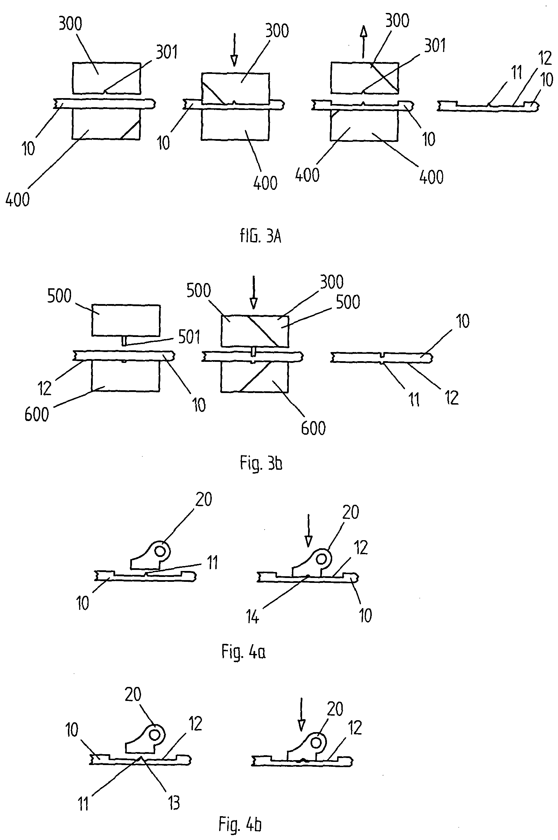

The advantages obtained by providing the fusion points or elements directly on the structural element 10 rather than on the joint 20 are evident. Firstly, formation of the fusion points 11 will be decidedly simplified due to the larger dimensions of the structural element 10, in particular of its surface 12, with respect to the dimensions of the joint or hinge 20. Secondly, the greater space available will allow the formation of a greater number of fusion points 11 than those that can be produced on the joint 20 and if necessary also in larger dimensions, thus guaranteeing a much more effective and reliable reciprocal fixing by electrowelding of the structural element 10 and the joint 20. Lastly, during the electrowelding there will be less heat on the joint 20 during fusion of the elements 11, therefore lowering the risk of damaging its component parts. Below, with reference to figure 3a, in which component parts and/or characteristics of the present invention already described previously with reference to other figures are identified by the same reference numbers, one of the possible methods that can be used according to the present invention to form the fusion points 11 directly on the structural element 10 will be described. The method shown in figure 3a is called coining and uses a press 300 and a counter element 400 between which at least one portion of the structural element 10 is placed, i.e. the portion used to form the fusion points 11. As shown in figure 3a, the press 300 comprises a groove or lowering 301 made in the surface of the press 300 which comes into contact with the surface 12 of the structural element 10 from which the fusion points 11 will protrude. The groove 301, or the grooves 301 if there are more than one, will have a shape corresponding to that of the fusion points 11 to be formed. Pressing of the structural element 10 between the press 300 and the supporting element 400 results in deformation of the surface 12 of the structural element 10 from which, therefore, at the end of the process the fusion elements or points 11 will protrude or jut out.

The process shown schematically in figure 3b, in which component parts and/or characteristics of the present invention already described previously with reference to other figures are identified by the same reference numbers, is called punching and differs from the coining process of figure 3a in that the press 500 comprises on the surface that comes into contact with the surface 12 of the structural element 10 not a groove or a lowering but a punch 501 which protrudes from said surface. In this case it is the counter element 600 that comprises a groove or lowering in a position corresponding to that of the punch 501. When the structural element 10 or a portion of it is pressed between the press 500 and the counter element 600, part of the component material of the structural element 10 will be pushed by the punch 501 into the corresponding lowering of the counter element 600 forming a fusion element or point 11, in this case protruding from the surface 12 opposite the surface engaged by the press 500. Obviously, also in this case, if several fusion elements or points have to be formed, it is sufficient to arrange a plurality of punches 501 on the press 500 and a corresponding plurality of lowerings on the counter element 600. Obviously the two methods of coining and punching described above are preferably used if the structural element 10 or at least one portion of it is made of a material suitable for being fused by electrowelding. Other procedures suitable for being used for formation of the fusion points 11, if the structural element or at least one portion of it is made of a material suitable for being fused by electrowelding, comprise processes involving milling of the structural element 10 and removal of material from the structural element 10. If, on the other hand, the structural element 10 is made of a material not suitable for being fused by electrowelding, the fusion points or elements 11 can be formed by means of alternative methods, for example by point deposition of material suitable for being fused by electrowelding.

Below, with reference to figures 4a and 4b in which, again, component parts and/or characteristics of the present invention already described previously with reference to other figures are identified by the same reference numbers, two electrowelding processes will be described which can be used to fix a structural element 10 according to two alternative embodiments of the present invention to a second element, for example to a joint or hinge 20. In the case of figure 4a, the structural element 10 is very similar to the structural element that can be obtained via the process of figure 3a and therefore comprises a plurality of fusion points or elements 11 which protrude from one of its surfaces 12. In this case, as previously anticipated, the joint or hinge 20 is brought into contact with the fusion points or elements 11, subsequently causing the passage of electrical current through the structural element 10 and the joint 20 and therefore fusion of the fusion points or elements 11. The joint 20 is then definitively fixed to the structural element 10 by cooling of the material 14 produced by fusion of the fusion points or elements 11. In the case of figure 4b on the other hand, the fusion points 11 are surrounded by grooves or collection lowerings 13 made on the same surface 12 as the one from which the fusion points 11 protrude. These grooves or collection lowerings 13 can be provided in a number equal to that of the fusion points 11, in which case each fusion point 11 is provided with a collection lowering 13, or they can be provided in a different number, each lowering 13 being therefore designed for a plurality of fusion points or elements 11. The advantage of using the grooves or collection lowerings 13 lies in the fact that inside them the material produced by fusion of the fusion points 11 will accumulate, hence closer contact will be obtained between the structural element 10 and the joint 20 and the fusion material will not be able to disperse and cause unsightliness or affect component parts of the joint 20 for example, with the risk of compromising the operation thereof when said fusion material is completely cooled.

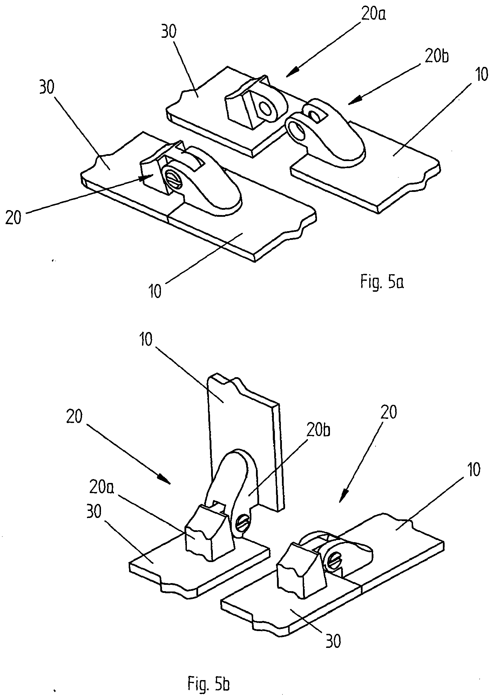

The shape and dimensions of the collection lowerings 13 can vary according to requirements and/or circumstances, in particular according to the shape and dimensions of the fusion points or elements 11. For example, in the case of frustoconical fusion points or elements, a particularly effective shape for the collection lowerings 13 is that of a circle surrounding the base of each frustoconical fusion element, or a plurality of frustoconical fusion elements 11. Figure 5a shows a first example of possible use of a structural element according to the present invention. In this case in fact, the joint or hinge 20 is composed of two parts 20a and 20b, each one fixed to a structural element 10. It is therefore evident that in this case, both the structural elements 10 and 30 can be provided with fusion elements 11 very similar to those described previously, hence the two component parts of the hinge 20a and 20b can each be fixed by electrowelding to a structural element 30 (for example the lateral element or bridge of glasses) and to a structural element 10 (for example a side piece of glasses) respectively. In this case, the two structural elements 10 and 30 can be reciprocally fixed to each other by fixing the two component parts 20a and 20b to each other, for example by means of a rotation pin. In this case, the reciprocal fixing operations of the two structural elements 10 and 30 will be considerably simplified since on each of them, one of the two component parts 20a and 20b of the joint 20 can be previously fixed by electrowelding.

The example of use shown schematically in figure 5b differs from the example of use just described with reference to figure 5a because, in the case of this example of use, the joint 20 is previously assembled, reciprocally fixing its component parts 20a and 20b (again by means of a rotation pin, for example) and because the component parts 20a and 20b are subsequently each fixed to a structural element 10 and 30. Obviously in the case of both the uses just described with reference to figures 5a and 5b, it will be possible to fix even only one of the two component parts 20a and 20b of the joint 20 to a structural element 10 or 30 by electrowelding, while the remaining component part of the joint 20 can be fixed to the corresponding structural element by means of alternative procedures, for example by fixing by gluing or by screws or similar fixing means.

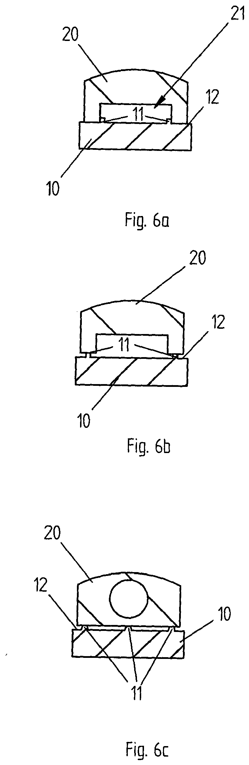

Below, with reference to the figures from 6a to 6b, further advantages of the present invention will be clarified, i.e. the fact that according to the present invention the fusion elements 11 are provided directly not on the joint or hinge 20 but on the structural element 10. For example, in the case of figure 6a, the joint or hinge 20 comprises at least one portion in the form of a shaped profile, substantially in a C shape. In this case, the fusion elements 11 can be formed in appropriate positions so as to pre-define and facilitate positioning of the joint or hinge 20 on the structural element 10. The joint or hinge 20 will therefore always be correctly positioned on the structural element 10 thus avoiding positioning and/or alignment errors. In fact, as shown in figure 6a, the fusion points or elements 11 can be provided around a perimeter or path corresponding to the form of the profiled portion of the joint or hinge 20, in particular so as to be housed within the space 21 defined by the profiled portion of the joint or hinge 20. In this case, as shown in figure 6a, the fusion points or elements 11 will advantageously have a substantially cylindrical shape, although other shapes are possible.

In the example of figure 6b, on the other hand, the fusion points or elements 11 are formed in positions corresponding to the contact surfaces (with the surface 12 of the structural element 10) defined by the parallel portions of the shaped profile of the joint 20. Also in this case the fusion points or elements 11 will represent an indication or a reference for correct positioning of the joint 20 with respect to the structural element 10.

Lastly, the example of figure 6c shows that by forming the fusion points or elements directly on the structural element 10, said fusion points can be arranged on said structural element 10 according to the most appropriate pattern most suited to the needs and/or circumstances; for example, as shown in figure 6c, the fusion points or elements can be provided in positions such as to come into contact with the thickest parts of the joint 20 and therefore the least deformable by heating; on the other hand, if the fusion points or elements are provided on the joint, the same can be formed only at the level of those portions or parts of the joint characterised by a sufficient quantity of material for the formation of said fusion points.

It has therefore been shown by means of the previous description that the present invention allows the desired objects and aims to be achieved, overcoming the problems typical of the solutions known in the state of the art according to which the fusion points or elements are formed on the joint or hinge, preferably by milling or removal of material. For example, by means of the present invention the fusion points can be produced in the required number and size and in any case not limited or conditioned by the dimensions of the joint or hinge. Furthermore, the fusion points can be produced by means of different methods and not only by milling and/or removal of material, but alternatively for example by deposition of material fused by electrowelding or also by means of processes such as coining and/or truncating.

Lastly, formation of the fusion points on the structural element instead of on the hinge will avoid or at least limit the unsightliness produced by the fusion points on the joint or the hinge, will allow reciprocal fixing of the structural element or hinge also via methods alternative to electrowelding (always maintaining a good appearance), will avoid overheating and possible total or partial damage of the component parts of the joint in the case of reciprocal fixing of the joint or hinge and a structural element by electrowelding, and provide improved logistical management of the component parts of the frames for glasses, in particular of the joints which, being free of electrowelding fusion points, can be applied or fixed to the other structural elements also by means of methods or procedures alternative to electrowelding.

It should be noted that the present invention is not limited to the embodiments described previously.

For example, the present invention allows a wide choice of materials for formation of the fusion points or elements, materials which can for example include bronze, titanium or similar materials.

The object of the present invention is defined by the claims.

## Claims

1. Frame (100) for glasses , said frame (100) comprising a side piece (10), a hinge element (20) and a structural element (30),
said side piece (10) being adapted to be rigidly fixed to the hinge element (20), said side piece (10) and said structural element (30) being connected to each other by means of said hinge element (20), **characterized in that** said side piece (10) comprises a main fixing surface (12) substantially flat from which a plurality of fusion points (11), made of a material suitable for being fused by electrowelding, protrudes, said plurality of fusion points (11) being shaped and sized so as to be adapted to be fused during electrowelding, so as to allow said side piece (10) to be rigidly fixed to said hinge element (20) of said frame (100) and **in that** said fusion points (11) are formed on said side piece (10):
around a perimeter or path corresponding to the form of the profiled portion of the hinge element (20), or in positions corresponding to the contact surfaces defined by the parallel portions of the shaped profile of the hinge element (20), or
in positions such as to come into contact with the thickest parts of the hinge element (20) for the correct positioning of the hinge element (20) on said side piece (10).

2. Frame (100) as claimed in claim 1, **characterized in that** said side piece (10) comprises at least a receiving portion (13) adapted to receive at least part of the fusion material (14) produced by the fusion during electrowelding of said fusion points (11).

3. Frame (100) as claimed in claim 2, **characterized in that** said at least one receiving portion (13) comprises a groove or lowering of said main fixing surface (12) and **in that** said groove or lowering (13) is located near to said fusion points (11).

4. Frame (100) as claimed in one of claims 2 to 3, **characterized in that** said fusion points (11) have a frustoconical shape and **in that** said at least one receiving portion or groove (13) develops along a circular path and essentially surrounds the base of said frustocone.

5. Method for fabricating a side piece (10) of a frame (100) for glasses as claimed in claims 1 to 4, said side piece (10) being in particular adapted to be rigidly fixed to the hinge element (20) of said frame (100), said hinge element (20) being adapted to connect said side piece (10) to the structural element (30) of said frame (100), **characterized in that** said method comprises at least one operation step for forming a plurality of fusion points (11) of said side piece (10), said fusion points (11) being shaped and sized so as to be adapted to be fused during electrowelding, so as to allow said side piece (10) to be rigidly fixed to said hinge element (20) of said frame (100), and **in that** said fusion points (11) are formed on said side piece (10):
around a perimeter or path corresponding to the form of the profiled portion of the hinge element (20), or
in positions corresponding to the contact surfaces defined by the parallel portions of the shaped profile of the hinge element (20), or
in positions such as to come into contact with the thickest parts of the hinge element (20) for the correct positioning of the hinge element (20) on said side piece (10).

6. Method as claimed in claim 5, **characterized in that** said fusion points (11) are formed by deposing fusion material on said side piece (10), said fusion material being adapted to be fused during electrowelding.

7. Method as claimed in claim 5, **characterized in that** said fusion points (11) are formed by coining at least a portion of said side piece (10), said portion of said side piece (10) being made of a material adapted to be fused during electrowelding.

8. Method as claimed in claim 5, **characterized in that** said fusion points (11) are formed by truncation of at least one portion of said side piece (10), said portion of said side piece (10) being made of a material adapted to be fused by electrowelding.

9. System (200) for assembling frames (100) of glasses, said system (200) comprising a side piece (10) adapted to be used for assembling the frame (100) of glasses and a hinge element (20), adapted to be rigidly fixed to each other, said hinge element (20) being adapted to rotatably connect said side piece (10) to a structural element (30) of said frame (100), **characterized in that** said side piece (10) is a side piece of a frame for glasses (100) as claimed in one of claims 1 to 4.

10. System as claimed in claim 9, **characterized in that** said side piece (10) comprises a plurality of fusion points (11), **in that** said hinge element (20) comprises at least a space (21) adapted to receive said fusion points (11) so that accommodating said fusion points (11) in said at least one space (21) allows said side piece (10) and said hinge element (20) to be reciprocally positioned.

## Patentansprüche

1. Rahmen (100) für eine Brille, wobei der Rahmen (100) ein Seitenteil (10), ein Scharnierelement (20) und ein Strukturelement (30) umfasst,
wobei das Seitenteil (10) angepasst ist, um starr an dem Scharnierelement (20) befestigt zu werden, wobei das Seitenteil (10) und das Strukturelement (30) mittels des Scharnierelements (20) miteinander verbunden sind, **dadurch gekennzeichnet, dass** das Seitenteil (10) eine im Wesentlichen flache Hauptbefestigungsfläche (12) aufweist, von der aus eine Vielzahl von Verbindungspunkten (11) hervorsteht, die aus einem Material hergestellt ist, das geeignet ist, durch Elektroschweißen angeschmolzen zu werden, wobei die Vielzahl von Verbindungspunkten (11) so geformt und bemessen ist, dass sie so angepasst werden kann, dass sie während des Elektroschweißens angeschmolzen werden kann, so dass das Seitenstück (10) starr an dem Scharnierelement (20) des Rahmens (100) befestigt werden kann, und dadurch, dass die Verbindungspunkte (11) an dem Seitenstück (10) ausgebildet sind:
um einen dem Profilabschnitt des Scharnierelements (20) entsprechenden Umfang oder Pfad herum oder in Positionen, die den durch die parallelen Abschnitte des geformten Profils des Scharnierelements (20) definierten Kontaktflächen entsprechen, oder in Positionen, die so sind, dass sie mit den dicksten Teilen des Scharnierelements (20) in Kontakt kommen,
um das Scharnierelement (20) an dem Seitenteil (10) korrekt zu positionieren.

2. Rahmen (100) nach Anspruch 1, **dadurch gekennzeichnet, dass** das Seitenteil (10) mindestens einen Aufnahmeabschnitt (13) aufweist, der angepasst ist, um mindestens einen Teil des durch das Anschmelzen beim Elektroschweißen der Verbindungspunkte (11) erzeugten Schmelzmaterials (14) aufzunehmen.

3. Rahmen (100) nach Anspruch 2, **dadurch gekennzeichnet, dass** der mindestens eine Aufnahmeabschnitt (13) eine Nut oder Absenkung der Hauptbefestigungsfläche (12) aufweist und dass die Nut oder Absenkung (13) in der Nähe der Verbindungspunkte (11) angeordnet ist.

4. Rahmen (100) nach einem der Ansprüche 2 bis 3, **dadurch gekennzeichnet, dass** die Verbindungspunkte (11) eine kegelstumpfförmige Form haben und dass der mindestens eine Aufnahmeabschnitt oder die Nut (13) sich entlang einer Kreisbahn entwickelt und im Wesentlichen die Basis des Kegelstumpfes umgibt.

5. Verfahren zur Herstellung eines Seitenteils (10) eines Rahmens (100) für eine Brille nach den Ansprüchen 1 bis 4, wobei das Seitenteil (10) insbesondere geeignet ist, starr an dem Scharnierelement (20) des Rahmens (100) befestigt zu werden, wobei das Scharnierelement (20) geeignet ist, das Seitenteil (10) mit dem Strukturelement (30) des Rahmens (100) zu verbinden, **dadurch gekennzeichnet, dass** das Verfahren mindestens einen Arbeitsschritt zum Bilden einer Vielzahl von Verbindungspunkten (11) des Seitenteils (10) umfasst, wobei die Verbindungspunkte (11) so geformt und bemessen sind, dass sie so angepasst werden können, dass sie während des Elektroschweißens angeschmolzen werden, so dass das Seitenteil (10) starr an dem Scharnierelement (20) des Rahmens (100) befestigt werden kann, und dass die Verbindungspunkte (11) an dem Seitenteil (10) gebildet werden:
um einen dem Profilabschnitt des Scharnierelements (20) entsprechenden Umfang oder Pfad herum oder in Positionen, die den durch die parallelen Abschnitte des geformten Profils des Scharnierelements (20) definierten Kontaktflächen entsprechen, oder in Positionen, die so sind, dass sie mit den dicksten Teilen des Scharnierelements (20) in Kontakt kommen,
um das Scharnierelement (20) an dem Seitenteil (10) korrekt zu positionieren.

6. Verfahren nach Anspruch 5, **dadurch gekennzeichnet, dass** die Verbindungspunkte (11) durch Abscheiden von Schmelzmaterial auf dem Seitenstück (10) gebildet werden, wobei das Schmelzmaterial angepasst ist, um während des Elektroschweißens angeschmolzen zu werden.

7. Verfahren nach Anspruch 5, **dadurch gekennzeichnet, dass** die Verbindungspunkte (11) durch Prägen mindestens eines Abschnitts des Seitenstücks (10) gebildet werden, wobei der Abschnitt des Seitenstücks (10) aus einem Material hergestellt ist, das geeignet ist, während des Elektroschweißens angeschmolzen zu werden.

8. Verfahren nach Anspruch 5, **dadurch gekennzeichnet, dass** die Verbindungspunkte (11) durch Abschneiden mindestens eines Abschnitts des Seitenstücks (10) gebildet werden, wobei der Abschnitt des Seitenstücks (10) aus einem Material hergestellt ist, das geeignet ist, durch Elektroschweißen angeschmolzen zu werden.

9. System (200) zum Zusammenbau von Rahmen (100) für Brillen, wobei das System (200) ein Seitenteil (10), das dazu geeignet ist, zum Zusammenbau des Rahmens (100) für Brillen verwendet zu werden, und ein Scharnierelement (20) umfasst, die dazu geeignet sind, starr aneinander befestigt zu werden, wobei das Scharnierelement (20) dazu geeignet ist, das Seitenteil (10) drehbar mit einem Strukturelement (30) des Rahmens (100) zu verbinden, **dadurch gekennzeichnet, dass** das Seitenteil (10) ein Seitenteil eines Rahmens für eine Brille (100) nach einem der Ansprüche 1 bis 4 ist.

10. System nach Anspruch 9, **dadurch gekennzeichnet dass** das Seitenteil (10) eine Vielzahl von Verbindungspunkten (11) umfasst, so dass das Scharnierelement (20) zumindest einen Spalt (21) umfasst, der angepasst ist, um die Verbindungspunkte (11) aufzunehmen, so dass es das Aufnehmen dieser Verbindungspunkte (11) in diesen mindestens einen Spalt (21) erlaubt, dass das Seitenteil (10) und das Scharnierelement (20) gegenseitig positioniert werden.

## Revendications

1. Monture (100) destinée à des lunettes, ladite monture (100) comprenant un élément latéral (10), un élément de charnière (20) et un élément structurel (30), ledit élément latéral (10) étant adapté pour être fixé de manière rigide sur l'élément de charnière (20), ledit élément latéral (10) et ledit élément structurel (30) étant reliés l'un à l'autre à l'aide dudit élément de charnière (20), **caractérisée en ce que** ledit élément latéral (10) comprend une surface de fixation principale (12) sensiblement plate depuis laquelle plusieurs points de fusion (11), composés d'un matériau adapté pour être fondu par électro-soudure, dépassent, lesdits points de fusion (11) étant formés et dimensionnés de façon à être adaptés pour être fondus pendant l'électro-soudure, de façon à permettre audit élément latéral (10) d'être fixé de manière rigide sur ledit élément de charnière (20) de ladite monture (100), et **en ce que** lesdits points de fusion (11) sont formés sur ledit élément latéral (10) : autour d'un périmètre ou d'un trajet correspondant à la forme de la partie profilée de l'élément de charnière (20), ou à des emplacements qui correspondent aux surfaces de contact définies par les parties parallèles du profil mis en forme de l'élément de charnière (20), ou à des emplacements qui leur permettent d'entrer en contact avec les parties les plus épaisses de l'élément de charnière (20) en vue du positionnement adéquat de l'élément de charnière (20) sur ledit élément latéral (10).

2. Monture (100) selon la revendication 1, **caractérisée en ce que** ledit élément latéral (10) comprend au moins une partie de réception (13) adaptée pour recevoir au moins une partie du matériau de fusion (14) produit par la fusion pendant l'électro-soudure desdits points de fusion (11).

3. Monture (100) selon la revendication 2, **caractérisée en ce que** ladite au moins une partie de réception (13) comprend une rainure ou un abaissement de ladite surface de fixation principale (12), et **en ce que** ladite rainure ou ledit abaissement (13) se trouve près desdits points de fusion (11).

4. Monture (100) selon l'une des revendications 2 à 3, **caractérisée en ce que** lesdits points de fusion (11) possèdent une forme tronconique et **en ce que** ladite au moins une partie de réception ou rainure (13) se développe le long d'un trajet circulaire et entoure essentiellement la base de ladite forme tronconique.

5. Procédé de fabrication d'un élément latéral (10) d'une monture (100) destinée à des lunettes selon les revendications 1 à 4, ledit élément latéral (10) étant en particulier adapté pour être fixé de manière rigide sur l'élément de charnière (20) de ladite monture (100), ledit élément de charnière (20) étant adapté pour relier ledit élément latéral (10) à l'élément structurel (30) de ladite monture (100), **caractérisé en ce que** ledit procédé comprend au moins une étape de formation d'une pluralité de points de fusion (11) dudit élément latéral (10), lesdits points de fusion (11) étant formés et dimensionnés de façon à être adaptés pour être fondus pendant l'électro-soudure, de façon à permettre audit élément latéral (10) d'être fixé de manière rigide sur ledit élément de charnière (20) de ladite monture (100), et **en ce que** lesdits points de fusion (11) sont formés sur ledit élément latéral (10) :
autour d'un périmètre ou d'un trajet correspondant à la forme de la partie profilée de l'élément de charnière (20), ou à des emplacements qui correspondent aux surfaces de contact définies par les parties parallèles du profil mis en forme de l'élément de charnière (20), ou à des emplacements qui leur permettent d'entrer en contact avec les parties les plus épaisses de l'élément de charnière (20) en vue du positionnement adéquat de l'élément de charnière (20) sur ledit élément latéral (10).

6. Procédé selon la revendication 5, **caractérisé en ce que** lesdits points de fusion (11) sont formés en déposant du matériau de fusion sur ledit élément latéral (10), ledit matériau de fusion étant adapté pour être fondu pendant l'électro-soudure.

7. Procédé selon la revendication 5, **caractérisé en ce que** lesdits points de fusion (11) sont formés en matriçant au moins une partie dudit élément latéral (10), ladite partie dudit élément latéral (10) étant composée d'un matériau adapté pour être fondu pendant l'électro-soudure.

8. Procédé selon la revendication 5, **caractérisé en ce que** lesdits points de fusion (11) sont formés par troncation d'au moins une partie dudit élément latéral (10), ladite partie dudit élément latéral (10) étant composée d'un matériau adapté pour être fondu par électro-soudure.

9. Système (200) d'assemblage de montures (100) de lunettes, ledit système (200) comprenant un élément latéral (10) adapté pour être utilisé pour assembler la monture (100) de lunettes et un élément de charnière (20), adaptés pour être fixés de manière rigide l'un sur l'autre, ledit élément de charnière (20) étant adapté pour relier de manière rotative ledit élément latéral (10) à un élément structurel (30) de ladite monture (100), **caractérisé en ce que** ledit élément latéral (10) est un élément latéral d'une monture de lunettes (100) selon l'une des revendications 1 à 4.

10. Système selon la revendication 9, **caractérisé en ce que** ledit élément latéral (10) comprend une pluralité de points de fusion (11), **en ce que** ledit élément de charnière (20) comprend au moins un espace (21) adapté pour recevoir lesdits points de fusion (11) de sorte que le placement desdits points de fusion (11) dans ledit au moins un espace (21) permette audit élément latéral (10) et audit élément de charnière (20) d'être positionnés de manière réciproque.
